(19) Europäisches Patentamt
European Patent Office
Office européen des brevets

(11) EP 2 343 265 A1

(12) **EUROPEAN PATENT APPLICATION**

(43) Date of publication:
**13.07.2011 Bulletin 2011/28**

(51) Int Cl.:
***C02F 1/469*** *(2006.01)*

(21) Application number: **10188253.8**

(22) Date of filing: **20.10.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.01.2010 KR 20100001322**

(71) Applicant: **SAMSUNG ELECTRONICS CO., LTD.**
**Suwon-si**
**Gyeonggi-do 442-742 (KR)**

(72) Inventors:
- **Kim, Hyun-seok**
  **449-712, Gyeonggi-do (KR)**
- **Kang, Hyo-rang**
  **449-712, Gyeonggi-do (KR)**
- **Yang, Ho-jung**
  **449-712, Gyeonggi-do (KR)**
- **Kim, Chang-hyun**
  **449-712, Gyeonggi-do (KR)**

(74) Representative: **Zijlstra, Robert Wiebo Johan**
**Elkington and Fife LLP**
**Prospect House**
**8 Pembroke Road**
**Sevenoaks, Kent TN13 1XR (GB)**

# (54) Deionization device and fluid deionization method

(57) A deionization device (10) including at least one flow path (11) configured for an influent fluid; at least one pair of electrodes (13a,13b); at least one charge barrier (12a,12b) disposed between the at least one flow path (11) and a corresponding electrode of the at least one pair of electrodes (13a,13b); and at least one electrolyte solution (14a,14b) disposed between at least one electrode of the at least one pair of electrodes (13a,13b) and a corresponding charge barrier of the at least one charge barrier (12a,12b), wherein at least one electrode of the at least one pair of electrodes (13a,13b) includes an electrochemical redox active material, and the at least one electrolyte solution (14a,14b) and the influent fluid are different.

FIG. 1

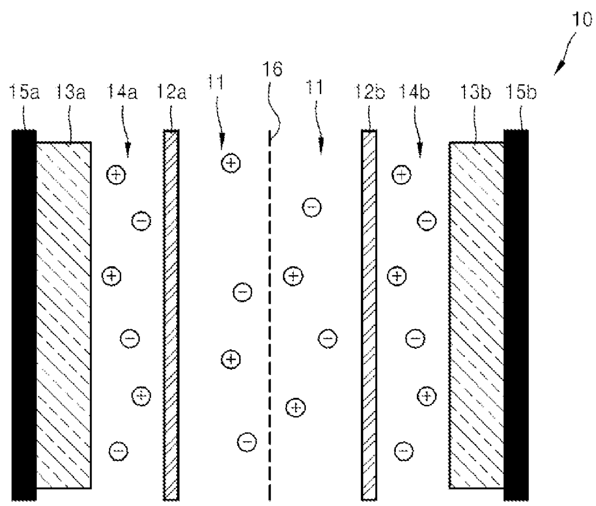




Printed by Jouve, 75001 PARIS (FR)

## Description

BACKGROUND

The present disclosure relates to a deionization device and a method of deionizing a fluid.

Tap water, such as tap water supplied to homes, contains hardness components, e.g., water-hardening minerals such as calcium. The hardness components may vary according to the region from which the water is sourced. In particular, in Europe, where large amounts of limestone components are contained in underground water, the hardness of tap water is significant.

Unwanted and undesirable scaling easily occurs in a device, such as a heat exchanger of a home appliance or an inner wall of a boiler, when the device is contacted with hard water which contains a high concentration of hardness components. Scaling can result in significantly reduced energy efficiency of the device. In addition, hard water is unsuitable for washing due to the difficulty of forming a lather in hard water. Typical methods for overcoming such problems associated with the use of hard water include (i) removing the scaling with chemicals, (ii) chemically softening hard water using an ion exchange resin, wherein after use the contamination in the ion exchange resin may be removed using a large amount of highly-concentrated salt water, so that the ion exchange resin may be reused, and (iii) electrodialysis of the hard water. However, such methods are inconvenient, cause environmental damage, or consume too much energy. Thus, there is a need for a simpler and more environmentally friendly technology for softening hard water with high energy efficiency.

A capacitive deionization ("CDI") device is used to remove an ionic material from a medium, for example, hard water, by applying a voltage to a pair of electrodes having nano-sized pores to polarize the electrodes, thereby adsorbing the ionic material onto a surface of the electrodes. In the CDI device, when a low direct current ("DC") voltage is applied to the electrodes while the medium containing dissolved ions flows between the two electrodes, i.e., a positive electrode and a negative electrode, anions dissolved in the medium are adsorbed and concentrated in the positive electrode, and cations dissolved in the medium are adsorbed and concentrated in the negative electrode. When an electric current is supplied in a reverse direction, e.g., by electrically shorting the two electrodes, the concentrated ions are desorbed from the negative electrode and positive electrode. Because CDI devices do not require a high electric potential difference, they can provide high energy efficiency. Furthermore, a CDI device may remove harmful ions as well as hardness components by adsorption onto electrodes, and the CDI electrodes may be regenerated without the use of chemicals, and thus a CDI device may have a relatively low environmental impact.

However, when an electric potential is applied to the electrodes of a CDI device, a large number of ions, i.e., co-ions, which are present in the pores of the electrodes and have the same polarity as the corresponding electrodes, are expulsed into the effluent water. As such, it is difficult to control all ions to be moved towards the corresponding electrode. For this reason, CDI devices have relatively low ion removal efficiency compared to the amount of applied charge.

In order to address this drawback, Andelman et al. (U.S. Patent No. 6,709,560) disclose a charge-barrier CDI device which includes a charge barrier, such as an ion exchange membrane, to improve the ion removal efficiency of the CDI device.

The charge-barrier CDI device is advantageous in terms of having an improved ion removal rate and efficiency, as compared to a CDI device, when it is used to treat water, such as seawater, which contains a high concentration of ions, wherein the prevention of co-ion expulsion is relatively more important. However, when the charge-barrier CDI device is used to treat hard water, which includes about 30 parts per million by weight (wtppm) to about 300 wtppm of a hardness component, the concentration of ions in pores of the electrodes is not sufficiently high, and the ion transfer rate in the pores is also low. Thus, the capacitance of electrode materials may not be fully utilized during charging/discharging.

As described above, performance of CDI devices is gradually improving, but because the a CDI device uses electrical double layer capacitance to remove ions, i.e., hardness components, by adsorbing the ions onto a surface of an electrode, an electrode material for the CDI device has a low capacitance when compared to that of an electrode material used for a battery, a pseudo-capacitor or the like.

In addition, a CDI device or the charge-barrier CDI device exhibit reduced ion removal efficiency when influent water (i.e., water to be treated) contains ions that are unsuitable for exhibiting capacitance of the electrode material. Accordingly, there remains a need for a CDI device having improved performance, including improved capacity.

Provided is a deionization device including at least one electrode including an electrochemical redox active material, and an electrolyte solution containing an ionic species, the type and/or total concentration of which is different from the type and/or total concentration of ionic species contained in influent water.

Additional aspects will be set forth in part in the description which follows and, in part, will be apparent from the description.

According to an aspect, a deionization device includes: at least one flow path configured for an influent fluid;

at least one pair of electrodes; at least one charge barrier disposed between the at least one flow path and a corresponding electrode of the at least one pair of electrodes; and at least one electrolyte solution disposed between at least one electrode of the at least one pair of electrodes and a corresponding charge barrier of the at least one charge barrier, wherein at least one electrode of the at least one pair of electrodes includes an electrochemical redox active material, and the at least one electrolyte solution and the influent fluid are different.

The at least one pair of electrodes may include a first electrode and a second electrode, wherein the at least one first electrode may include an electrochemical redox active material which is oxidized during charging and reduced during discharging, and a corresponding second electrode may include an electrochemical redox active material which is reduced during charging and oxidized during discharging.

The electrochemical redox active material may include at least one material selected from the group consisting of $MnO_2$, $MnO_2M_x$ wherein M is Li, Na, or K, and x is greater than 0 and less than or equal to about 1, $MnO_2Hx$ wherein x is greater than 0 and less than or equal to about 1, amorphous-$MnO_x{\cdot}nH_2O$ wherein x is greater than 0 and less than or equal to about 2 and n is greater than or equal to 0 and less than or equal to about 1, $Mn_2O_3$, $Ni(OH)_2$, $RuO_2$, $RuO_2H$, $TiO_2$, $PbO_2$, $NaWO_3$, $CaTiO_3$, Pb, $PbO_2$, $PbSO_4$, Cd, $Cd(OH)_2$, $NiO_2H$, $LaNi_5$, a metal hydride, Si, $SiO_2$, Sn, $LiMn_20_4$, $LiFePO_4$, and carbon.

The at least one pair of electrodes may include a first electrode and a second electrode, wherein the first electrode may include an other active material which is different from the electrochemical redox active material and a corresponding second electrode may include an electrochemical redox active material.

A reversible charge and discharge capacity of the electrochemical redox active material may be larger than a reversible charge and discharge capacity of the other active material.

The other active material may include at least one material selected from the group consisting of activated carbon, carbon black, an aerogel, a carbon nanotube ("CNT"), a mesoporous carbon, an activated carbon fiber, graphite, a graphite oxide, and a metal oxide.

An electrode of the at least one pair of electrodes may further include a binder and a conducting agent.

The at least one electrolyte solution may include ionic species which is different from an ionic species contained in the influent fluid.

The at least one electrolyte solution may include an ionic species having a higher total concentration than an ionic species contained in the influent fluid.

The at least one charge barrier may include at least one of a selectively cation-permeable membrane and a selectively anion-permeable membrane.

The at least one charge barrier and the corresponding electrode of the at least one pair of electrodes may be disposed opposite to and separated from each other.

The deionization device may further include at least one spacer which separates the at least one charge barrier and the corresponding electrode of the at least one pair of electrodes from each other.

The at least one charge barrier and the corresponding electrode of the at least one pair of electrodes may be disposed in contact with each other, and the at least one electrolyte solution may be disposed in a pore of the corresponding electrode.

The at least one charge barrier may include an ion exchange membrane.

The at least one electrolyte solution may include an ionic species derived from at least one electrolyte selected from the group consisting of KOH, NaOH, KCl, NaCl, $H_2SO_4$, HCl, $Na_2SO_4$, $K_2SO_4$, $LiPF_6$, and $LiBF_4$.

The deionization device may further include at least one spacer defining the at least one flow path.

The deionization device may further include at least one current collector disposed on a surface of each of the at least one pair of electrodes, wherein the surface is opposite to the corresponding flow path.

According to another aspect, a deionization device includes: at least one flow path configured for an influent fluid; at least one first electrode; at least one second electrode; at least one first charge barrier disposed between the at least one flow path and a corresponding first electrode of the at least one first electrode; at least one second charge barrier disposed between the at least one flow path and a corresponding second electrode of the at least one second electrode; and at least one first electrolyte solution disposed between the at least one first electrode and a corresponding first charge barrier of the at least one first charge barrier, wherein at least one of the at least one first electrode and the at least one second electrode includes an electrochemical redox active material, and the at least one first electrolyte solution and the influent fluid are different.

The at least one first charge barrier may include a selectively cation-permeable membrane, and the at least one second charge barrier may include a selectively anion-permeable membrane.

The deionization device may further include at least one second electrolyte solution disposed between the second electrode and a corresponding second charge barrier of the at least one second charge barrier, wherein the at least one second electrolyte solution may be the same as a corresponding first electrolyte solution of the at least one first electrolyte solution, and the second electrode and the corresponding second charge barrier may be disposed to be opposite to and separated from each other.

The deionization device may further include at least one second electrolyte solution disposed between the second electrode and a corresponding second charge barrier of the at least one second charge barrier, wherein the at least one second electrolyte solution may be the same as a corresponding first electrolyte solution of the at least one first electrolyte solution, and the second electrode and the corresponding second charge barrier may be disposed to be in contact with each other.

The deionization device may further include at least one second electrolyte solution disposed between the second electrode and a corresponding second charge barrier of the at least one second charge barrier, wherein the at least one second electrolyte solution and a corresponding first electrolyte solution of the at least one first electrolyte solution may be different, and the second electrode and the corresponding second charge barrier may be disposed to be to be opposite to and separated from each other.

The deionization device may further include at least one second electrolyte solution disposed between the second electrode and a corresponding second charge barrier of the at least one second charge barrier, wherein the at least one second electrolyte solution and a corresponding first electrolyte solution of the at least one first electrolyte solution may be different, and the second electrode and the corresponding second charge barrier may be disposed to be in contact with each other.

Also disclosed is a method of deionizing a fluid. The method includes flowing an influent fluid through a flow path which is defined by a first and a second charge barrier; moving a first anion from the influent fluid to a first electrolyte, which is disposed on a side of the first charge barrier which is opposite to the influent fluid; contacting the electrolyte with a first electrode material to form an oxidized first electrode material; moving a first cation from the influent fluid to a second electrolyte, which is disposed on a side of the second charge barrier which is opposite to the influent fluid; and adsorbing a second cation on a second electrode material to deionize the fluid.

BRIEF DESCRIPTION OF THE DRAWINGS

These and other aspects will become apparent and more readily appreciated from the following description of the embodiments, taken in conjunction with the accompanying drawings in which:

FIG. 1 is a schematic cross-sectional view of an exemplary embodiment of a deionization device;

FIG. 2 is a cross-sectional view for explaining a deionization principle of the deionization device of FIG. 1;

FIG. 3 is a cross-sectional view for explaining an electrode regeneration principle of the deionization device of FIG. 1;

FIG. 4 is a schematic view of another exemplary embodiment of a deionization device;

FIG. 5 is a graph of current (milliamperes per square centimeter, $mA/cm^2$) versus voltage (volts) showing cyclic voltamograms at a scan rate of 2 millivolts per second (mV/s) of an electrode including an electrochemical redox active material, specifically manganese dioxide ($MnO_2$), an electrode including another active material, specifically activated carbon, and an electrode including nickel hydroxide, wherein the electrodes are included in an exemplary embodiment of a deionization;

FIG. 6 is a graph of a relative ion removal amount (microsiemens.milliliters per micrometers·cubic centimeters, pS-mL/$\mu$m·$Cm^3$) versus charge/discharge cycle number and ratio of relative ion removal amount (percent, %) of each of the cells prepared according to Examples 1 through 3 and Comparative Example 1;

FIG. 7 is a graph of relative ion removal amount (microsiemens·milliliters per micrometers·cubic centimeters, $\mu$S·mL/$\mu$m·$Cm^3$) versus processing time (seconds, sec) of each of the cells of Examples 1 through 3 and Comparative Example 1;

FIG. 8 is a graph of ion conductivity (microsiemens per centimeter, $\mu$S/cm) versus processing time (seconds, sec) of effluent water that passed through each of the cells of Examples 1 through 3 and Comparative Example 1, versus processing time; and

FIG. 9 is a graph of capacitance (milliampere hours, mAHr) versus processing time (seconds, sec) of each of the cells of Examples 1 through 3 and Comparative Example 1.

DETAILED DESCRIPTION

Hereinafter, a deionization device according to an embodiment will be described in further detail with reference to the accompanying drawings.

The invention now will be described more fully hereinafter with reference to the accompanying drawings, in which various embodiments are shown. This invention may, however, be embodied in many different forms, and should not be construed as limited to the embodiments set forth herein. Rather, these embodiments are provided so that this disclosure will be thorough and complete, and will fully convey the scope of the invention to those skilled in the art. Like reference numerals refer to like elements throughout.

It will be understood that when an element is referred to as being "on" another element, it can be directly on the other element or intervening elements may be present therebetween. In contrast, when an element is referred to as being "directly on" another element, there are no intervening elements present. As used herein, the term "and/or" includes any and all combinations of one or more of the associated listed items.

It will be understood that, although the terms first, second, third etc. may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. Thus, a first element, component, region, layer, or section discussed below could be termed a second element, component, region, layer, or section without departing from the teachings of the present invention.

The terminology used herein is for the purpose of describing particular embodiments only and is not intended to be limiting. As used herein, the singular forms "a," "an" and "the" are intended to include the plural forms as well, unless the context clearly indicates otherwise. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The exemplary term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

FIG. 1 is a schematic cross-sectional view of an exemplary embodiment of a deionization device 10, FIG. 2 is a cross-sectional view for explaining a deionization principle of the deionization device 10 of FIG. 1, and FIG. 3 is a cross-sectional view for explaining an electrode regeneration principle of the deionization device 10 of FIG. 1.

Referring to FIG. 1 through 3, the embodiment of the deionization device 10 includes a flow path 11 configured for an influent fluid, a pair of charge barriers 12a and 12b, a pair of porous electrodes 13a and 13b which are impregnated with electrolyte solutions 14a and 14b, respectively, and a pair of current collectors 15a and 15b. In an embodiment, the influent fluid is water.

The influent water, which may be hard water, i.e., water with a high concentration of minerals as further disclosed below, flows along the flow path 11 and is deionized by the deionization device 10. Throughout the specification, hard water refers to water containing a large amount of ions, such as calcium ions, or magnesium ions, or other ions having similar characteristics. The ionic components of hard water may produce scaling, and such ions may inhibit forming a lather with soap. The influent water flowing into the flow path 11 may have an ionic conductivity of about 0.01 millisiemens per centimeter (mS/cm) to about 10 mS/cm, specifically about 0.1 mS/cm to about 1 mS/cm, more specifically about 0.5 mS/cm. When the ionic conductivity of the influent water is within the above range, the ions may be efficiently removed from the influent water without applying a high voltage or applying a large amount of electric charge (e.g., energy) into the pair of electrodes 13a and 13b.

The pair of charge barriers 12a and 12b are disposed to be opposite to and separated from each other with the flow path 11 disposed therebetween. The porous electrodes 13a and 13b, which will be further disclosed below, are ionically separated from the influent water flowing along the flow path 11 by the charge barriers 12a and 12b. However, the structure of the deionization device 10 is not limited thereto. For example, alternative embodiments include a configuration wherein only one of the charge barriers 12a and 12b is used, as is shown in FIG. 4. In addition, one of the charge barriers 12a and 12b may be a selectively anion-permeable membrane, for example, an anion exchange membrane. In such an embodiment, the other charge barrier of the charge barriers 12a and 12b may be a selectively cation-permeable membrane, for example, a cation exchange membrane. Each of the anion exchange membrane and the cation exchange membrane may have an ion selectivity of, for example, about 99 percent (%) to about 99.999%, specifically about 99.9% to about 99.999%. When the ion selectivity is within the above range, the ion removal efficiency may be high because the expulsion of co-ions from the pores of the porous electrodes 13a and 13b is effectively prevented or substantially reduced during charging, i.e., during deionization. Configurations wherein the charge barriers 12a and 12b have an ion selectivity of more than about 99.999% are also suitable, e.g. the charge barriers may have an ion selectivity of about 99.99% to about 99.9999%, specifically about 99.999%. The higher ion selectivities are of course desirable.

The electrolyte solutions 14a and 14b function as a medium for ion conduction in the pores of the porous electrodes 13a and 13b, respectively, which will be disclosed in further detail below, and between a corresponding porous electrode and charge barrier. Specifically, the electrolyte solution 14a may function as a medium for ion conduction between the porous electrode 13a and the charge barrier 12a, and the electrolyte solution 14b may function as a medium for ion conduction between the porous electrode 13b and the charge barrier 12b, respectively.

At least one of the electrolyte solutions 14a and 14b differs in chemical composition from the influent water as further disclosed below. Throughout the specification, when a solution is described as being different from another solution, this means that a type of at least one constituent component thereof or a concentration of at least one constituent component is different in one solution from in the other solution. Alternatively, when a solution is described as being substantially the same as another solution, this means that the type of substantially all of the constituent components and the concentration(s) thereof are substantially the same in both of the two solutions.

For example, the type and/or total concentration of the ionic species contained in at least one of the electrolyte solutions 14a and 14b may be different from the type and/or total concentration of the ionic species contained in the influent water. In addition, the types and/or total concentration of ionic species contained in the electrolyte solution 14a may be the same as, or may be different from, the type and/or total concentration of ionic species contained in the electrolyte solution 14b. Throughout the specification, the term 'electrolyte' refers to a material that dissociates into ions when it is dissolved in a solvent. An exemplary solvent includes water. A solution of the electrolyte in a solvent is termed an electrolyte solution. When the electrolyte is dissolved into a solvent, the electric current may be conducted through the electrolyte solution. In addition, throughout the specification, when types of ionic species are described as being different from one another, this means that a set of the ionic species contained in a solution differs from a set of the ionic species contained in the other solution(s). Alternatively, when types of ionic species are described as being substantially the same as one another, this means that a set of ionic species contained in a solution is substantially the same as a set of ionic species contained in the other solution(s). For example, a cationic species, for example, a potassium ion ($K^+$), contained in at least one of the electrolyte solutions 14a and 14b may be different from any of the cationic species, for example, a magnesium ion ($Mg^{2+}$) or a calcium ion ($Ca^{2+}$), which are contained in the influent water. Also, an anionic species, for example, a chloride ion ($Cl^-$), which is contained in at least one of the electrolyte solutions 14a and 14b may be different from any of the anionic species, for example, $HCO_3^-$, which are contained in the influent water.

In addition, the electrolyte solutions 14a and 14b may each independently include an ionic species which is derived from at least one electrolyte selected from the group consisting of KOH, NaOH, KCl, NaCl, $H_2SO_4$, HCl, $Na_2SO_4$, $K_2SO_4$, $LiPF_6$, and $LiBF_4$, and other materials having similar characteristics. An ionic species may be derived from an electrolyte by dissolution of the electrolyte in a solvent, thereby dissociating the electrolyte to provide a cation and an anion in solution.

In addition, in an embodiment, at least one of the electrolyte solutions 14a and 14b may not contain an impurity and may contain an ionic species that is suitable for exhibiting the capacitance of the active material of at least one of the porous electrodes 13a and 13b, which are further disclosed below. Because the deionization device 10 includes the porous electrodes 13a and 13b, which are impregnated with the electrolyte solutions 14a and 14b, respectively, wherein the each electrolyte has the characteristics disclosed above, the elements of the deionization device 10 that directly contact the electrolyte solutions 14a and 14b may comprise a wide variety of materials, wherein these elements may include the electrodes 13a and 13b, each of which comprises an active material, the current collectors 15a and 15b, and the charge barriers 12a and 12b. Accordingly, the CDI 10 has at least the following advantages, which are disclosed in further detail below.

First, an onset potential, which is an electric potential at which a reaction occurs, wherein the reaction may be a detrimental reaction, varies according to a combination of the type of electrolyte and the type of electrode material. Decomposition of the electrolyte and the porous electrode material due to an overvoltage may immediately deteriorate the performance of the electrode. Thus, an electrolyte having a wide potential window with respect to a material of interest, e.g., suitable for use in the porous electrodes 13a and 13b, may be used to improve durability (e.g., cycle performance) of the deionization device including the same.

Second, the size of the ion and the size of a hydrous layer comprising the ion and a water molecule may vary according to the ionic species contained in an electrolyte solution. Thus, the ion transfer rate in the pores of the porous electrodes 13a and 13b, in particular, in the mesopores (pore size 2nm~50nm) and/or the micropores (pore size < 2nm) of the porous electrodes 13a and 13b, is restricted when the size of the hydrated ion is substantially larger than the pore size of at least one of the porous electrodes 13a and 13b. In addition, according to a recent report, the charge (e.g., valence) of an ion and the size of an ion are significant factors determining the applicability of an inner surface of micropores of an electrode. Thus, an ion transfer rate in the pores and a capacitance of an electrode may be improved by choosing an electrolyte which is suitable for a structure of a selected active material.

Third, the formation of scale, which may potentially occur on an electrode, may be substantially prevented or effectively reduced by selecting the composition and hydrogen ion concentration (e.g., "pH") of the electrolyte solution.

When the total concentration of the ionic species contained in at least one of the electrolyte solutions 14a and 14b is higher than the total concentration of the ionic species contained in the influent water, the deionization device 10 may include the porous electrodes 13a and 13b, which are impregnated with electrolyte solutions 14a and 14b. In such an embodiment, the capacitance and/or capacity of the active material and the charge/discharge rate may be improved. While not wanting to be bound by theory, it is understood that these improvements may be obtained for at least the following reasons as disclosed in further detail below.

First, the capacitance of an active material may vary according to the concentration of an ionic species, even when the same active material is used. For example, a porous carbon material, which may be used as an active material, may have an extensive micro- and nano-sized pore network. However, if the concentration of an ionic species, which is permeated into the pores, is insufficient to provide effective adsorption therein, a substantial portion or a majority of the adsorption area of the porous carbon material may not be utilized, for example because the electrolyte does not contact an entire portion of the adsorption area of the porous carbon material, and thus the capacitance is reduced. In an embodiment, substantially an entire portion or a majority of the capacitance of the porous carbon material may be used by supplying a sufficient concentration of the electrolyte into the pores of at least one of the porous electrodes 13a and 13b.

Second, when the concentration of the ionic species in the pores is sufficient, the rate at which an electrode material may be charged and discharged, and thus the rate of charging and discharging of the device, may be improved. In a porous material with a complex pore network, the electrical resistance, which may result from ions moving in the pores, may limit the charge/discharge rate of the material. A charge/discharge rate of a material is greatly influenced by the pore structure of the material and the ion conductivity of an electrolyte solution. In particular, the charge/discharge rate of the material may be improved by supplying a high concentration of an electrolyte which has a high ionic conductivity into the pores. In an embodiment wherein at least one of a high electrolyte concentration and an electrolyte having a high ionic conductivity are used, the electrical current at a selected overvoltage may be increased.

Third, interfacial characteristics between the charge barrier and the electrolyte solution may be improved. If mass transfer (i.e., ion transfer) at the interface between the charge barrier and the electrolyte solution is not sufficiently fast, the resistance at the interface may be increased. Thus, if an ionic species having a high concentration is disposed between the charge barrier and the electrolyte solution, concentration polarization caused by ion depletion during discharging may be substantially reduced or effectively eliminated.

Fourth, energy efficiency in deionization and regeneration processes may be improved by use of a high concentration of ionic species in the pores and the improvement in interfacial characteristics disclosed above.

In addition, the deionization device 10 may increase a recovery rate represented by Equation 1 below.

Equation 1

Recovery Rate (percent, %) = {Total Volume of Treated Water/ Total Volume of Influent Water used for Deionization and Electrode Regeneration} X 100

When the influent water is hard water, the total concentration of ionic species, such as $K^+$ and $Cl^-$, which are contained in at least one of the electrolyte solutions 14a and 14b, may be, for example, about 0.05 molar (M) to about 10 M, specifically about 0.1 M to about 5 M, more specifically about 0.5 M to about 1 M. When the total concentration of the ionic species contained in at least one of the electrolyte solutions 14a and 14b is within the above range, the capacitance and/or capacity of the corresponding electrode may be substantially or fully utilized during charging and discharging, and the charge/discharge rate may be improved. In addition, at least one of the electrolyte solutions 14a and 14b may include an acid, and may have a pH of about 1 to about 5, specifically about 2 to about 4, more specifically about 3. When at least one of the electrolyte solutions 14a and 14b has a pH within the above range, water may not be readily decomposed on the surface of the corresponding electrode so that a wider potential window and stable operation may be provided. In addition, a precipitate, which may occur by the combination of OH- ions and $Ca^{2+}$ or $Mg^{2+}$ ions, may be substantially or entirely avoided. The acid may substantially or entirely prevent the deterioration of the porous electrodes 13a and 13b due to hard ionic components. Examples of the acid may include HCl, $HNO_3$, $H_2SO_4$, or citric acid, or a combination comprising at least one of the foregoing, and/or other materials with similar characteristics.

In addition, the deionization device 10 may further include an apparatus (not shown) for performing at least one of circulating, supplementing, and exchanging at least one of the electrolyte solutions 14a and 14b.

The pair of electrodes 13a and 13b, which are porous, may be disposed to be opposite to and separated from each other with at least one of the charge barriers 12a and 12b disposed therebetween, as illustrated in FIG. 1. The porous electrodes 13a and 13b may be disposed to be opposite to and separated from corresponding charge barriers of the charge barriers 12a and 12b, respectively. In this embodiment, the electrolyte solutions 14a and 14b may be disposed in the pores of the porous electrodes 13a and 13b, respectively, between the porous electrode 13a and the charge barrier 12a, and between the porous electrode 13b and the charge barrier 12b (see FIGS. 1 through 3). In another embodiment, the porous electrodes 13a and 13b may be disposed to contact the charge barriers 12a and 12b, respectively. See, for example FIG. 4, which shows electrode 23a contacting charge barrier 22. In such an alternative embodiment, the electrolyte solutions 14a and 14b may be disposed in the pores of the porous electrode 13a and the pores of the porous electrode 13b, respectively.

At least one electrode of the porous electrodes 13a and 13b includes an electrochemical redox active material. As used herein, the term 'electrochemical redox active material' refers to a material having an oxidation state which may be reversibly changed by a faradic reaction. While not wanting to be bound by theory, a faradic reaction is a charge transfer reaction and may occur on a surface of a particle comprising the electrochemical redox active material by electron transfer between the electrochemical redox active material and an ionic species of an electrolyte solution, such as the electrolyte solutions 14a or 14b, when an electric current is supplied thereto in a forward or a reverse direction.

A reversible charge and discharge capacity of the electrochemical redox active material may be greater than that of other active materials, in which a faradic reaction does not occur, even when a current is applied thereto. Accordingly, when the electrochemical redox active material is used in the deionization device 10, a total capacitance of the deionization device 10 may be remarkably increased. As used herein, the term 'reversible charge and discharge capacity' means the total amount of electric charge that may be reversibly added to and removed from an active material. In an embodiment, the active material may be charged using a uniform (e.g., constant) voltage condition, and discharged using an opposite (e.g., constant) voltage condition.

In the deionization device 10, one electrode of the porous electrodes 13a and 13b may include an electrochemical redox active material, and the other electrode may not include the electrochemical redox active material but may include other active material which is different from the electrochemical redox active material. Alternatively, in the deionization device 10, the porous electrode 13a may include an electrochemical redox active material, which is oxidized during charging and reduced during discharging, and the porous electrode 13b may include an electrochemical redox active material, which is reduced during charging and oxidized during discharging. When at least one of the porous electrodes 13a and 13b includes the electrochemical redox active material instead of the other active material, wherein the other active material may be a material that is used in a commercially available capacitive deionization device, the total capacitance of the deionization device 10 increases, and thus an ion removal amount per unit weight or unit volume of an electrode may be increased.

Throughout the specification, the term 'charging' means that a negative (-) electric potential is applied to the porous electrode 13a, and a positive (+) electric potential is applied to the porous electrode 13b, and the term 'discharging' means that the porous electrodes 13a and 13b are electrically shorted (e.g., electrically connected by a conductor) or a positive (+) electric potential is applied to the porous electrode 13a and a negative (-) electric potential is applied to the porous electrode 13b.

The electrochemical redox active material may include at least one material selected from the group consisting of $MnO_2$, $MnO_2M_x$ wherein M is an alkali metal such as Li, Na, or K and x is greater than 0 and less than or equal to about 1, $MnO_2H_x$ wherein x is greater than 0 and less than or equal to about 1, amorphous-$MnO_x \cdot nH_2O$ wherein x is greater than 0 and less than or equal to about 2 and n is greater than or equal to 0 and less than or equal to about 1, $Mn_2O_3$, $Ni(OH)_2$, $RuO_2$, $RuO_2H$, $TiO_2$, $PbO_2$, $NaWO_3$, $CaTiO_3$, Pb, $PbO_2$, $PbSO_4$, Cd, $Cd(OH)_2$, $NiO_2H$, $LaNi_5$, a metal

hydride, Si, $SiO_2$, Sn, $LiMn_2O_4$, $LiFePO_4$, and carbon.

The other active material may include a porous material having an electric double layer capacitance. As used herein, the term "electric double layer" refers to a structure comprising two layers, a first charged layer adjacent to a surface and a second layer having opposite charge on the first layer. The electrical double layer may be similar to a condenser and may be formed on an interface between the porous electrode 13a and the electrolyte solution 14a, and/or between the porous electrode 13b and the electrolyte solution 14b. The electrical double layer may be formed when an ionic species having an opposite polarity to the corresponding porous electrode 13a or 13b is adsorbed onto the porous electrode 13a or 13b, which is impregnated with the corresponding electrolyte solution 14a or 14b and thereafter positively (+) or negatively (-) charged. In addition, the capacitance of the other active material may be increased by equal to or greater than about 30% by using the above-described electrolyte solutions 14a and 14b, or hard water containing a high concentration of an ionic species, instead of the influent water, which may be a hard water containing a low concentration of an ionic species, as an electrolyte solution. The other active material may include at least one material selected from the group consisting of an activated carbon, carbon black, an aerogel, a carbon nanotube ("CNT"), a mesoporous carbon, an activated carbon fiber, graphite, a graphite oxide, and a metal oxide, and other materials having similar characteristics.

Although not illustrated, each of the porous electrodes 13a and 13b may further include a binder and a conducting agent.

Embodiments of the binder may include styrene butadiene rubber ("SBR"), polyvinylidene fluoride ("PVDF"), carboxymethylcellulose ("CMC"), or polytetrafluoroethlyene ("PTFE"), or a combination comprising at least one of the foregoing, or other materials with similar characteristics.

Embodiments of the conducting agent may include carbon black, vapor growth carbon fiber ("VGCF"), graphite, a combination comprising at least one of the foregoing, or other materials having similar characteristics.

The pair of current collectors 15a and 15b is electrically connected to an external power source (not shown). The current collectors 15a and 15b may apply a voltage to the pair of porous electrodes 13a and 13b, and are disposed on a surface of each of the porous electrodes 13a and 13b which is opposite to the flow path 11, respectively. The current collectors 15a and 15b may include a graphite plate, a graphite foil, at least one metal selected from the group consisting of copper (Cu), aluminum (Al), nickel (Ni), iron (Fe), cobalt (Co), and titanium (Ti), and an alloy thereof, and a mixture thereof, and may comprise other materials having similar characteristics.

The deionization device 10 may further include a spacer 16 which defines the flow path 11, a spacer (not shown) which defines a space between the porous electrode 13a and the charge barrier 12a, and/or a spacer (not shown) which defines a space between the porous electrode 13b and the charge barrier 12b. The spacers may be ion-permeable and electrically insulating, and may include an open mesh, a filter, or other material having similar characteristics.

An operating principle of the deionization device 10 will now be disclosed in further detail with reference to FIGS. 2 and 3.

In an embodiment, when the porous electrode 13a includes activated carbon as an active material, and the porous electrode 13b includes $MnO_2H_x$ wherein $0<\times\leq1$ or $Ni(OH)_2$ as an active material, a faradic reaction may occur in the porous electrode 13b during charging and discharging according to Reaction Scheme 1 or 2 below. In this embodiment, the electrolyte solution 14a may include a potassium chloride (KCl) aqueous solution and the electrolyte solution 14b may include a $Na_2SO_4$ aqueous solution or a potassium hydroxide (KOH) aqueous solution.

Reaction Scheme 1

(First charge) $MnO_2H_x \rightarrow MnO_2 + xH^+ + e^-$, $0<x\leq1$
(First discharge) $MnO_2 + Na^+ + e- \rightarrow MnO_2Na$
(Subsequent charge and discharge) $MnO_2Na \leftrightarrow MnO_2 + Na^+ + e^-$

[Reaction Scheme 2]

$Ni(OH)_2 + OH^- \leftrightarrow NiO_2H + H_2O + e^-$

First, referring to FIG. 2, the porous electrode 13a, which may include activated carbon, is negatively charged, and the porous electrode 13b, which may include $MnO_2H_x$ wherein $0<\times\leq1$ or $Ni(OH)_2$, is positively charged. A cationic species, such as $K^+$, may be adsorbed to the porous electrode 13a, and in order to maintain charge balance, a cationic species may be introduced to or anionic species may be removed from the electrolyte solution 14a, which may be a KCl aqueous solution. However, the electrolyte solution 14a is isolated by the charge barrier 12a, which may be a cation exchange membrane, and thus only a cationic species may move between the electrolyte solution 14a and the influent water. Accordingly, a cationic species, such as $Ca^{2+}$ or $Mg^{2+}$, may be removed from the influent water and the cationic species may move from the influent water to the electrolyte solution 14a. Alternatively, when the porous electrode 13b includes $MnO_2H_x$, the $MnO_2H_x$ in the porous electrode 13b may dissociate ($MnO_2H_x \rightarrow MnO_2 + xH^+ + e-$ wherein $0<x\leq1$),

and when the porous electrode 13b includes $Ni(OH)_2$, the $Ni(OH)_2$ in the porous electrode 13b may electrochemically react with an adjacent ionic species, such as hydroxyl ($OH^-$) ($Ni(OH)_2 + OH^- \rightarrow NiO_2H + H_2O + e^-$). Thus in the porous electrode 13b which includes $Ni(OH)_2$, a concentration of anionic species ($OH^-$) in the electrolyte solution 14b may become lower than a concentration of cationic species ($K^+$) therein, and thus in order to maintain charge balance, an anionic species may be introduced to or cationic species may be removed from the electrolyte solution 14b, which may be a KOH aqueous solution. However, because the electrolyte solution 14b is isolated by the charge barrier 12b, which may be an anion exchange membrane, only an anionic species may move between the electrolyte solution 14b and the influent water. Accordingly, anionic species, such as OH- or $Cl^-$, may be removed from the influent water while the anionic species may move from the influent water to the electrolyte solution 14b. Also, in the porous electrode 13b, which may include $MnO_2H_x$, the $MnO_2H_x$ may be changed to $MnO_2Na$ during a first charging and discharging, and then the $MnO_2Na$ may be dissociated in a subsequent (e.g., second) charging ($MnO_2Na \rightarrow MnO_2 + Na^+ + e^-$). As a result, a concentration of the cationic species (e.g., $Na^+$ or $H^+$) in the electrolyte solution 14b may become higher than a concentration of the anionic species (e.g., $SO_4^{2-}$) therein, and thus in order to maintain charge balance, an anionic species may be introduced to or cationic species may be removed from the electrolyte solution 14b, which may be a $Na_2SO_4$ aqueous solution. However, because the electrolyte solution 14b is isolated by the charge barrier 12b, which may be an anion exchange membrane, only an anionic species may move between the electrolyte solution 14b and the influent water. Accordingly, an anionic species, such as OH- or $Cl^-$, may be removed from the influent water when the anionic species may move from the influent water to the electrolyte solution 14b. The operations described with reference to FIG. 2 are referred to as charging. As a result, the influent water is deionized. A relative ion removal amount resulting from the charging may be obtained according to Equation 2 below, by measuring an ionic conductivity of the influent water to be introduced to the deionization device 10 and an ionic conductivity of the effluent water flowing out from the deionization device 10 as a function of the processing time.

Equation 2

$$Q = \frac{A}{V}$$

In Equation 2, Q is the relative ion removal amount, A is the ion removal amount, and V is the electrode volume. The electrode volume V may be determined as the electrode area multiplied by the electrode thickness, thus the relative ion removal amount Q has the units $mS \cdot mL/\mu m \cdot cm^3$, which can be simplified to $mS/\mu m$ as 1 mL equals 1 $cm^3$ The relative ion removal amount Q may be determined by integrating a difference between the ionic conductivity of the influent water and the ionic conductivity of the effluent water (i.e., Ionic Conductivity of Influent Water - Ionic Conductivity of Effluent Water) with respect to processing time and multiplying by the flow rate of the influent water per unit electrode volume ((i.e., Flow Rate of Influent Water)/( Electrode Area)/( Electrode Thickness)).

Referring to FIG. 3, which discloses the regeneration or discharging process, the porous electrode 13a, which in an embodiment includes the activated carbon, is positively charged, and the porous electrode 13b, which in an embodiment includes the $MnO_2$ or the $NiO_2H$, is negatively charged. The porous electrode 13b, which included the $MnO_2H_x$ or the $Ni(OH)_2$ prior to deionization or charging now respectively include $MnO_2$ or $NiO_2H$ because the $MnO_2H_x$ or the $Ni(OH)_2$ are respectively changed (e.g., oxidized) to $MnO_2$ or $NiO_2H$ upon charging as is illustrated in FIG. 2. In the discharge process, a cationic species, such as $Ca^{2+}$ or $Mg^{2+}$, may be desorbed from the porous electrode 13a, which may include the activated carbon, and may be expulsed with the effluent water through the charge barrier 12a, which may be a cation exchange membrane. Also, during the discharging process, in the porous electrode 13b, which includes $MnO_2$, $MnO_2$ and $Na^+$ electrochemically react with each other to form $MnO_2Na$ ($MnO_2 + Na^+ + e- \rightarrow MnO_2Na$), and in an embodiment wherein the porous electrode 13b includes $NiO_2H$, $NiO_2H$ and water electrochemically react with each other to form $Ni(OH)_2$ ($NiO_2H + H_2O + e^- \rightarrow Ni(OH)_2 + OH^-$). As disclosed above, due to an electrochemical reaction in the negatively charged porous electrode 13b, the concentration of the cationic species (e.g., $Na^+$ or $K^+$) in the electrolyte solution 14b may become lower than the concentration of the anionic species (e.g., $SO_4^{2-}$ or $OH^-$), or the concentration of the anionic species (e.g., $SO_4^{2-}$ or $OH^-$) may become higher than the concentration of the cationic species (e.g., $Na^+$ or $K^+$). Accordingly, in order to maintain charge balance, a cationic species may be introduced to or an anionic species may be removed from the electrolyte solution 14b, which may be a $Na_2SO_4$ or KOH aqueous solution. However, because the electrolyte solution 14b is isolated by the charge barrier 12b, which may be an anion exchange membrane, only an anionic species may move between the electrolyte solution 14b and the influent water. Accordingly, an anionic species, such as OH- or $Cl^-$, may be expulsed with the effluent water when the anion species may move from the electrolyte solution 14b to the influent water. The operations disclosed with reference to FIG. 3 are referred to as discharging. The porous electrodes 13a and 13b are regenerated through the discharging process. A degree of regeneration of the porous electrodes 13a and 13b may be confirmed by measuring the ion conductivity of the effluent water expulsed from the deionization device 10.

FIG. 4 is a schematic view of another embodiment of a deionization device 20.

Hereinafter, the deionization device 20 of FIG. 4 will be further disclosed through comparison with the deionization device 10 of FIG. 1. Detailed structures and operating principles of the deionization device 20 illustrated in FIG. 4 are substantially similar to those of the deionization device 10 of FIG. 1 disclosed above with reference to FIGS. 1 through 3, and thus a detailed description thereof will not be repeated.

Differences between the deionization device 20 of FIG. 4 and the deionization device 10 of FIG. 1 include that in the deionization device 20 of FIG. 4, a charge barrier 22, which may be a cation exchange membrane, is disposed to contact a corresponding electrode 23a, a charge barrier corresponding to the electrode 23b is omitted, and an electrolyte solution 24 is disposed only in the pores of the corresponding electrode 23a. The electrode 23a functions as a negative electrode and the porous electrode 23b functions as a positive electrode, or visa versa during charging. In addition, the deionization device 20 includes a separator 26 which defines a flow path 21 configured for influent water, and current collectors 25a and 25b disposed on sides of the electrodes 23a and 23b, respectively.

Although the deionization devices 10 and 20 of FIGS. 1 to 4 as illustrated include one flow path, one or a pair of charge barriers, a pair of electrolyte solutions, a pair of electrodes, and a pair of current collectors, the structure of the deionization devices 10 and 20 is not limited thereto. For example, alternative embodiments of a deionization device of the present disclosure may be any of the devices disclosed in Korean Patent Application No. 2009-0077161, the content of which in its entirety is herein incorporated by reference, wherein at least one electrode of two corresponding electrodes includes the electrochemical redox active material disclosed above.

Hereinafter, one or more embodiments of the present disclosure will be disclosed in further detail with reference to the following examples. These examples are not intended to limit the purpose and scope of the one or more embodiments of the disclosure.

Examples

(Preparation of Electrode)

Preparation Example 1: Preparation of Activated Carbon Electrode

A 45 gram (g) quantity of activated carbon (PC available from Osaka Gas Co., Ltd.), 5 g of carbon black, 4.17 g of an aqueous suspension of 60% by weight of polytetrafluoroethylene ("PTFE"), and 100 g of propylene glycol were put into a stirring vessel, kneaded, and then pressed to obtain a result product. The resulting product was dried in an oven at 80°C for 1 hour, at 120°C for 1 hour, and at 200°C for 1 hour to complete the preparation of the activated carbon electrode. Then, the activated carbon electrode was cut into 3 pieces, each having an area of 10 cm x 10 cm (100 $cm^2$), and a weight of each cut activated carbon electrode was measured. Each of the cut activated carbon electrodes had a thickness of 510 micrometers ($\mu$m) and a weight of 2.7 g.

Preparation Example 2: Preparation of $MnO_2H_x$ (x=0.3) Electrode

A 6.636 gram (g) quantity of potassium permanganate and 350 milliliters (mL) of deionized water were put into a stirring vessel and stirred for 1 hour. Then, 4.81 g of carbon black was additionally put into the stirring vessel and then stirred for 1 hour while irradiating with 40 kHz ultrasonic waves. Next, a manganese sulfate monohydrate aqueous solution, which was obtained by putting 16.23 g of manganese sulfate monohydrate into 420 mL of deionized water and stirring the mixture for 1 hour, was dripped into the stirring vessel and was stirred for 24 hours. Then, a solid particle, which formed in the stirring vessel, was washed with deionized water and dried at 110°C for 12 hours to obtain solid powder. A 10.5 g quantity of the solid powder and 0.58 g of carbon black were sufficiently mixed to obtain a mixture, and then 0.97 g of an aqueous suspension of 60% by weight of PTFE and 20 g of propylene glycol were mixed with the mixture, kneaded, and pressed to obtain a resulting product. The resulting product was dried in an oven at 80°C for 1 hour, at 120°C for 1 hour, and at 200°C for 1 hour to complete the preparation of the $MnO_2H_x$ electrode. The $MnO_2H_x$ electrode was cut to prepare 1 piece having an area of 10 cm x 10 cm (100 $cm^2$), and a weight of the piece was measured. The $MnO_2H_x$ electrode had a thickness of 430 $\mu$m and a weight of 2.9 g.

Preparation Example 3: Preparation of $Ni(OH)_2$ Electrode

A 10.32 g quantity of $Ni(OH)_2$ (available from Tanaka Chemical Corporation), 3.68 g of carbon black, 1.23 g of an aqueous suspension of 60% by weight of PTFE, and 15 g of propylene glycol were put into a stirring vessel, kneaded, and then pressed to obtain a resulting product. The resulting product was dried in an oven at 80°C for 1 hour, at 120°C for 1 hour, and at 200°C for 1 hour to complete the preparation of the electrode. Then, the electrode was cut into 2 pieces, each having an area of 10 cm x 10 cm (100 $cm^2$), and a weight of each cut electrode was measured. Each of the electrodes had a thickness of 430 μm and a weight of 3.4 g.

Example 1: Preparation of a Cell including an Activated Carbon Electrode and a $MnO_2H_x$ (x=0.3) Electrode

First, one piece of the activated carbon electrode prepared in Preparation Example 1 was vacuum impregnated with an electrolyte solution of 0.5 M KCl aqueous solution. Also, the $MnO_2H_x$ electrode prepared in Preparation Example 2 was vacuum impregnated with an electrolyte solution of 0.5 M $Na_2SO_4$ aqueous solution.

Second, a cell was prepared by sequentially stacking a current collector, which in this example was a graphite plate, the activated carbon electrode as described above, a cation exchange membrane, which in this example was an Neosepta CMX membrane available from ASTOM Corporation, a separator, which in this example was a water-permeable open mesh, an anion exchange membrane, which in this example was an Neosepta AMX membrane available from ASTOM Corporation, the $MnO_2H_x$ electrode described as above, and a current collector, which in this example was a graphite plate, in the stated order, and then combining them by using a screw.

Third, an electrolyte solution of 0.5 M KCl aqueous solution was injected between the activated carbon electrode and the cation exchange membrane, and an electrolyte solution of 0.5 M $Na_2SO_4$ aqueous solution was injected between the $MnO_2H_x$ electrode and the anion exchange membrane.

Example 2: Preparation of a Cell including an Activated Carbon Electrode and a $Ni(OH)_2$ Electrode

A cell was prepared in the same manner as in Example 1, except that the $Ni(OH)_2$ electrode prepared in Preparation Example 3 and an electrolyte solution of 3 M KOH aqueous solution were used instead of the $MnO_2H_x$ electrode prepared in Preparation Example 2 and the electrolyte solution of 0.5 M $Na_2SO_4$ aqueous solution.

Example 3: Preparation of a Cell including $MnO_2H_x$ (x=0.3) Electrode and an $MnO_2H_x$ (x=0.3) Electrode

A cell was prepared in the same manner as in Example 1, except that the $MnO_2H_x$ electrode prepared in Preparation Example 2 and an electrolyte solution of 0.5 M $Na_2SO_4$ aqueous solution were used instead of the activated carbon electrode prepared in Preparation Example 1 and the electrolyte solution of 0.5 M KCl aqueous solution.

Comparative Example 1: Preparation of a Cell including Two Activated Carbon Electrodes

A cell was prepared in the same manner as in Example 1, except that the activated carbon electrode prepared in Preparation Example 1 and an electrolyte solution of 0.5 M KCl aqueous solution were used instead of the $Mn_2H_x$ electrode prepared in Preparation Example 2 and the electrolyte solution of 0.5 M $Na_2SO_4$ aqueous solution.

Evaluation Examples

Evaluation Example 1: Evaluation of Relative Capacitance of Electrodes

Table 1 and FIG. 5 show results of measuring reversible charge and discharge capacity of each of the electrodes prepared in Preparation Examples 1 through 3 by using a cyclic voltammeter (SI 1287 available from Solatron) under following conditions. In FIG. 5, an internal area of each cyclic voltammogram is proportional to the reversible charge and discharge capacity of the corresponding electrode.

(1) Reference Electrode: Ag/AgCl (RE-5B available from Wonatech)

(2) Counter Electrode: Platinum Electrode (self-prepared)

(3) Electrolyte Solution: 0.5 M KCl Aqueous Solution (Activated Carbon Electrode), 0.5 M $Na_2SO_4$ Aqueous Solution ($MnO_2H_x$ Electrode), and 3M KOH Aqueous Solution ($Ni(OH)_2$ Electrode)

Table 1

| | Activated Carbon Electrode | $MnO_2H_x$ Electrode | $Ni(OH)_2$ Electrode |
|---|---|---|---|
| Reversible Charge and Discharge Capacity[*1] (mC/cm$^2$ μm) | 1.1 | 5.4 | 8.9 |
| *1: Charge and Discharge Capacity per (Electrode Area multiplied by Electrode Thickness), millicoulombs per square centimeter·micrometers (mC/cm$^2$μm) | | | |

Referring to Table 1 and FIG. 5, the reversible charge and discharge capacities of the $MnO_2H_x$ electrode and the $Ni(OH)_2$ electrode are at least 5 times greater than the reversible charge discharge capacity of the activated carbon electrode.

Evaluation Example 2: Evaluation of Cell Performance

The cells prepared in Examples 1 and 2, and Comparative Example 1 were each operated under the following conditions.

First, each cell was operated at room temperature, while a sufficient amount of influent water was supplied to the cell.

Second, hard water, specifically International Electrotechnical Commission ("IEC") 60734 having an ionic conductivity of 1050 microsiemens per centimeter μS/cm, was used as the influent water, and the flow rate of the influent water was adjusted to 17 milliliters per minute (mL/min).

Third, a charge and discharge cycle was repeated as follows. Hereinafter, an electrode that contacts the cation exchange membrane is referred to as a negative electrode and an electrode that contacts the anion exchange membrane is referred to as a positive electrode. Initially, (i) a power source was connected to each of the electrodes to supply a constant voltage of 1.7 V for 11 minutes to deionize the influent water (e.g., perform a charging process); (ii) then, 10 seconds of rest was maintained; (iii) next, the cell voltage was maintained at a reverse voltage of -0.8 V until the amount of charge was completely discharged to perform discharging, i.e., to regenerate the electrode (e.g. perform a discharging process).

Fourth, the ion conductivities of the effluent water that passed through each cell were measured using an ionic conductivity meter (HORIBA, D-54, Sensor: 3561-10D) while operating the cells.

Last, the amount of charge charged to each cell as a function of processing time was measured based on the amount of current supplied to each cell through the power source.

The cell prepared in Example 3 was operated in the same manner as Examples 1 and 2 and Comparative Example 1, except that a cell voltage was maintained to be a constant voltage of 1.7 V for 13 minutes and 20 seconds during the charging process to deionize the influent water.

FIG. 6 is a graph of a relative ion removal amount of each of the cells of Examples 1 through 3 and Comparative Example 1, versus a number of charge/discharge cycles, and FIG. 7 is a graph of a relative ion removal amount of each of the cells of Examples 1 through 3 and Comparative Example 1, versus processing time. In FIG 6, a right vertical axis denotes a ratio of a relative ion removal amount of each of the cells of Examples 1 through 3 and Comparative Example 1 to a relative ion removal amount during a first charging and discharging of the cell of Comparative Example 1, as a percentage.

Referring to FIGS. 6 and 7, the relative ion removal amounts of the cells of Examples 1 through 3 are at least 40% higher than the relative ion removal amount of the cell of Comparative Example 1 per each charge/discharge cycle.

FIG. 8 is a graph of ion conductivity of effluent water that passed through each of the cells of Examples 1 through 3 and Comparative Example 1, versus processing time, and FIG. 9 is a graph of capacitance of each of the cells of Examples 1 through 3 and Comparative Example 1, versus processing time. In FIG. 9, the capacitance was measured by measuring a total amount of charge charged to, or discharged from, the each cell using a charger/discharger, specifically model WMPG1000 manufactured by Wonatec, under a constant voltage of 1.7 V during charge or -0.8 V during discharge.

Referring to FIGS. 8 and 9, the cells of Examples 1 through 3 have a greater amount of ions removed from the influent water during charging, have a longer deionization time (e.g., processing time), and a generally shorter electrode regeneration time during discharge than those of the cell of Comparative Example 1. Accordingly, it is easily expected that the recovery rates of the cells of Examples 1 through 3 may be higher than the recovery rate of the cell of Comparative Example 1.

It should be understood that the exemplary embodiments described therein should be considered in a descriptive sense only and not for purposes of limitation. Descriptions of features or aspects within each embodiment should typically be considered as available for other similar features or aspects in other embodiments.

## Claims

1. A deionization device comprising:

   at least one flow path configured for an influent fluid;
   at least one pair of electrodes including a first electrode and a second electrode;
   at least one first charge barrier disposed between the at least one flow path and a corresponding electrode of the at least one pair of electrodes; and
   at least one electrolyte solution in contact with at least one first electrode of the at least one pair of electrodes and separated from the at least one flow path by a corresponding first charge barrier of the at least one charge barrier,
   wherein at least one of the first electrode and the second electrode comprises an electrochemical redox active material, and the at least one electrolyte solution and the influent fluid are different.

2. The deionization device of claim 1, wherein the first electrode comprises an electrochemical redox active material which is oxidized during charging and reduced during discharging, and a corresponding second electrode comprises an electrochemical redox active material which is reduced during charging and oxidized during discharging.

3. The deionization device of claim 1 or 2, wherein the electrochemical redox active material comprises at least one material selected from the group consisting of $MnO_2$, $MnO_2M_x$ wherein M is Li, Na, or K, and x is greater than 0 and less than or equal to about 1, $MnO_2H_x$ wherein x is greater than 0 and less than or equal to about 1, amorphous-$MnO_x$-$nH_2O$ wherein x is greater than 0 and less than or equal to about 2 and n is greater than or equal to 0 and less than or equal to about 1, $Mn_2O_3$, $Ni(OH)_2$, $RuO_2$, $RuO_2H$, $TiO_2$, $PbO_2$, $NaWO_3$, $CaTiO_3$, Pb, $PbO_2$, $PbSO_4$, Cd, $Cd(OH)_2$, $NiO_2H$, $LaNi_5$, a metal hydride, Si, $SiO_2$, Sn, $LiMn_2O_4$, $LiFePO_4$, and carbon.

4. The deionization device of claim 1, wherein the first electrode comprises an other active material which is different from the electrochemical redox active material and a corresponding second electrode comprises an electrochemical redox active material.

5. The deionization device of claim 4, wherein a reversible charge and discharge capacity of the electrochemical redox active material is larger than a reversible charge and discharge capacity of the other active material.

6. The deionization device of claim 4 or 5, wherein the other active material comprises at least one material selected from the group consisting of activated carbon, carbon black, an aerogel, a carbon nanotube, a mesoporous carbon, an activated carbon fiber, graphite, a graphite oxide, and a metal oxide.

7. The deionization device of claim 1, wherein an electrode of the at least one pair of electrodes further comprises a binder and a conducting agent.

8. The deionization device of claim 1, wherein the at least one first charge barrier and the corresponding electrode of the at least one pair of electrodes are disposed opposite to and separated from each other.

9. The deionization device of claim 1, wherein the at least one first charge barrier and the corresponding electrode of the at least one pair of electrodes are disposed in contact with each other, and the at least one electrolyte solution is disposed in a pore of the corresponding electrode.

10. The deionization device of claim 1, wherein the at least one charge barrier comprises an ion exchange membrane.

11. The deionization device of claim 1, wherein the at least one electrolyte solution comprises an ionic species derived from at least one electrolyte selected from the group consisting of KOH, NaOH, KCl, NaCl, $H_2SO_4$, HCl, $Na_2SO_4$, $K_2SO_4$, $LiPF_6$, and $LiBF_4$.

12. A deionization device of any of claims 1-11, wherein the at least one first charge barrier is disposed between the at least one flow path and a corresponding first electrode of the at least one pair of electrodes, the deionization device further comprising at least one second charge barrier disposed between the at least one flow path and a corresponding second electrode of the at least one pair of electrodes.

13. The deionization device of claim 12, wherein the at least one first charge barrier comprises a selectively cation-permeable membrane, and the at least one second charge barrier comprises a selectively anion-permeable membrane.

**14.** The deionization device of claim 12 or 13, further comprising at least one second electrolyte solution disposed between the second electrode and a corresponding second charge barrier of the at least one second charge barrier, wherein the at least one second electrolyte solution is the same as a corresponding first electrolyte solution of the at least one first electrolyte solution.

**15.** The deionization device of claim 12 or 13, further comprising at least one second electrolyte solution disposed between the second electrode and a corresponding second charge barrier of the at least one second charge barrier, wherein the at least one second electrolyte solution and a corresponding first electrolyte solution of the at least one first electrolyte solution are different.

**16.** A method of deionizing a fluid, the method comprising:

flowing an influent fluid through a flow path which is defined by a first and a second charge barrier;
moving a first anion from the influent fluid to a first electrolyte, which is disposed on a side of the first charge barrier which is opposite to the influent fluid;
contacting the electrolyte with a first electrode material to form an oxidized first electrode material;
moving a first cation from the influent fluid to a second electrolyte, which is disposed on a side of the second charge barrier which is opposite to the influent fluid; and
adsorbing a second cation on a second electrode material to deionize the fluid.

FIG. 1

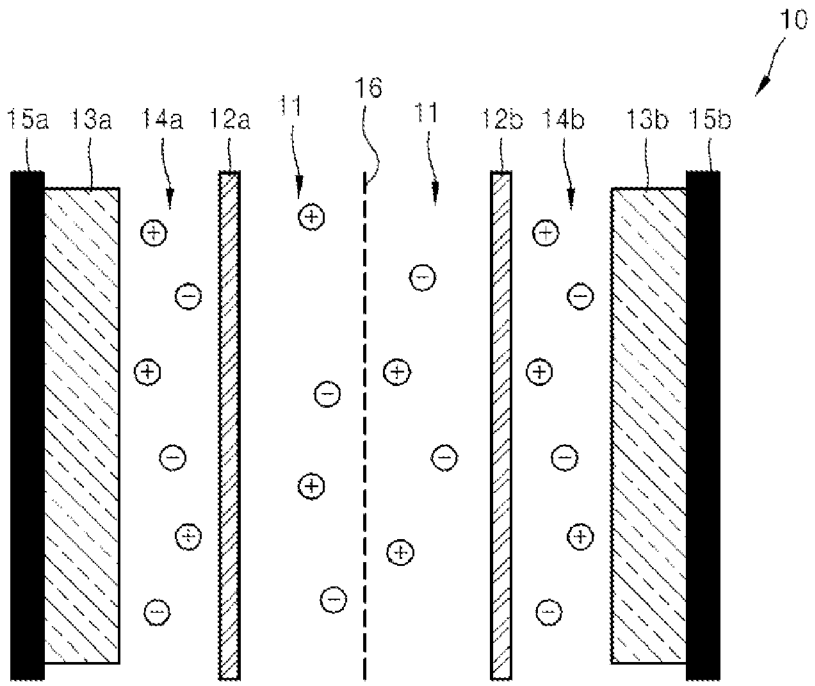

FIG. 2

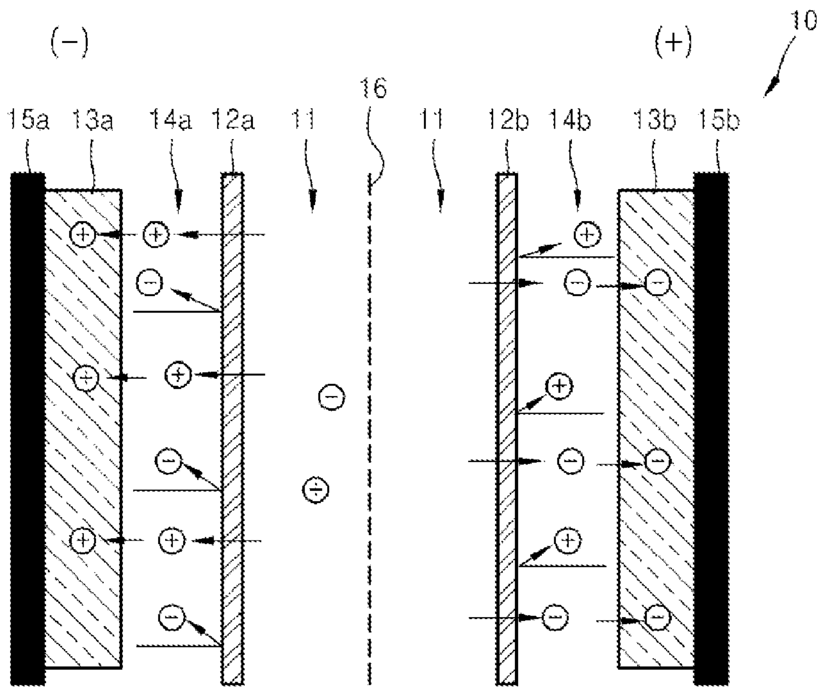

FIG. 3

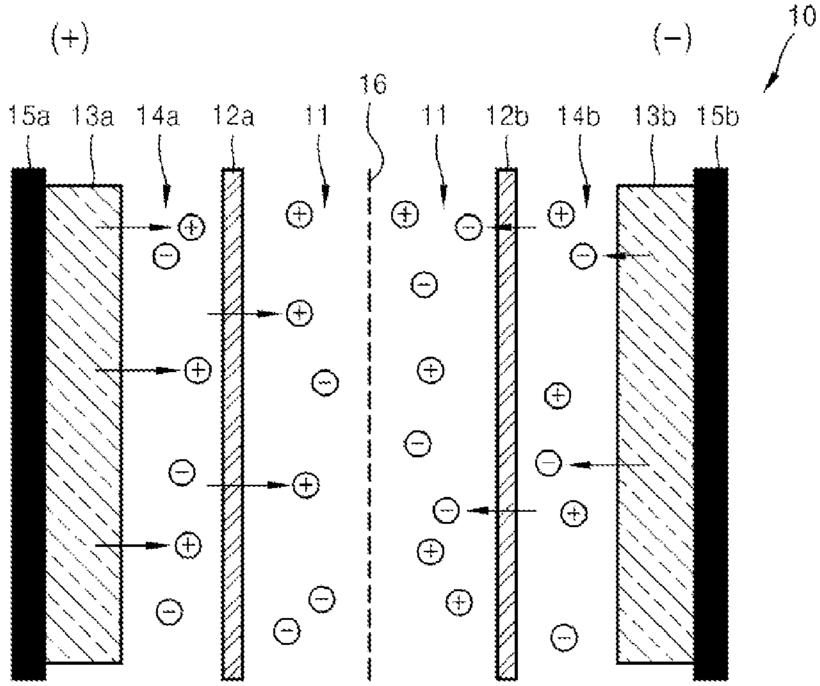
(+)
(−)
10
16
15a
13a
14a
12a
11
11
12b
14b
13b
15b

FIG. 4

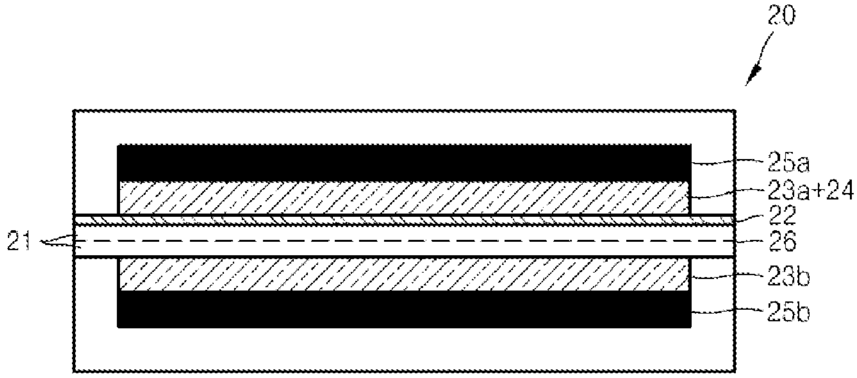
20
25a
23a+24
22
21
26
23b
25b

FIG. 5

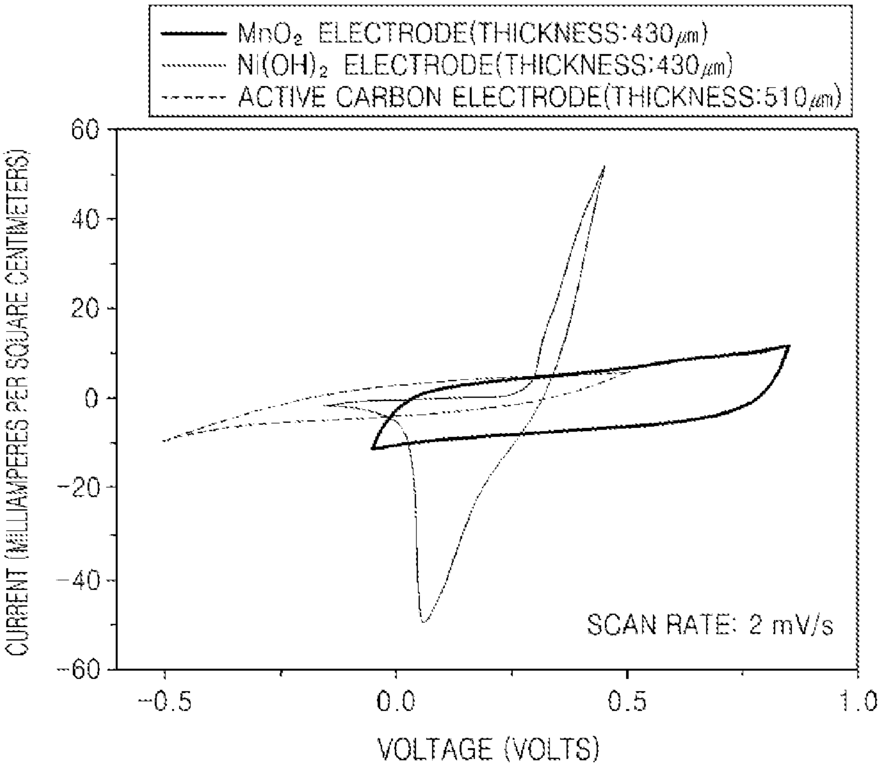

MnO2 ELECTRODE(THICKNESS:430㎛)
Ni(OH)2 ELECTRODE(THICKNESS:430㎛)
ACTIVE CARBON ELECTRODE(THICKNESS:510㎛)
CURRENT (MILLIAMPERES PER SQUARE CENTIMETERS)
60
40
20
0
-20
-40
-60
SCAN RATE: 2 mV/s
-0.5
0.0
0.5
1.0
VOLTAGE (VOLTS)

FIG. 6

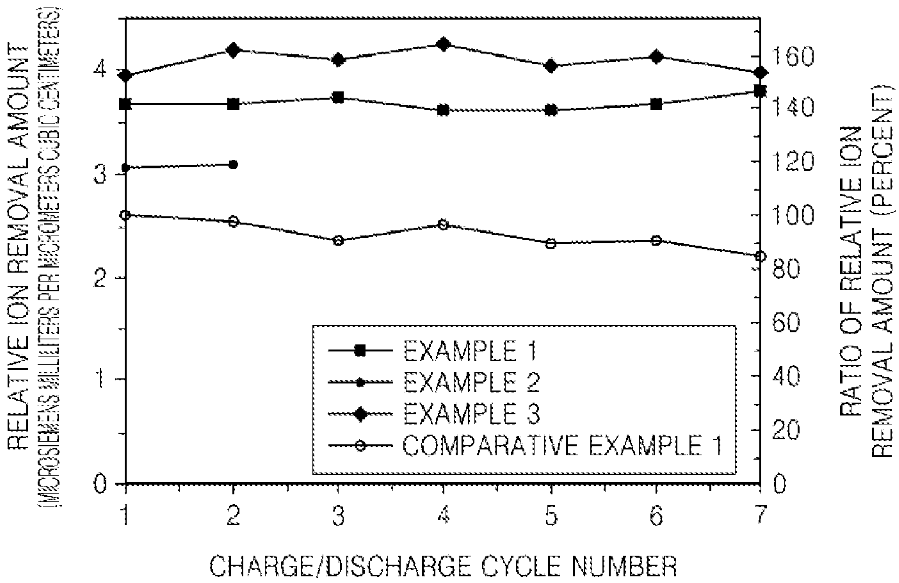
RELATIVE ION REMOVAL AMOUNT
(MICROSIEMENS MILLILITERS PER MICROMETERS CUBIC CENTIMETERS)
RATIO OF RELATIVE ION
REMOVAL AMOUNT (PERCENT)
CHARGE/DISCHARGE CYCLE NUMBER
EXAMPLE 1
EXAMPLE 2
EXAMPLE 3
COMPARATIVE EXAMPLE 1
0
1
2
3
4
20
40
60
80
100
120
140
160
5
6
7

FIG. 7

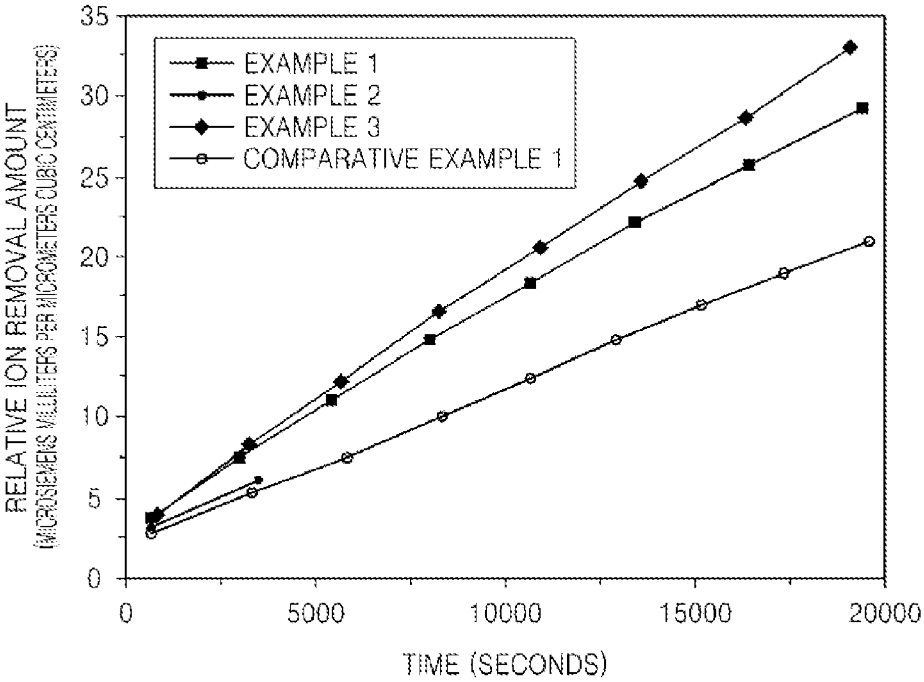
EXAMPLE 1
EXAMPLE 2
EXAMPLE 3
COMPARATIVE EXAMPLE 1
RELATIVE ION REMOVAL AMOUNT
(MICROSIEMENS MILLILITERS PER MICROMETERS CUBIC CENTIMETERS)
0
5
10
15
20
25
30
35
0
5000
10000
15000
20000
TIME (SECONDS)

FIG. 8

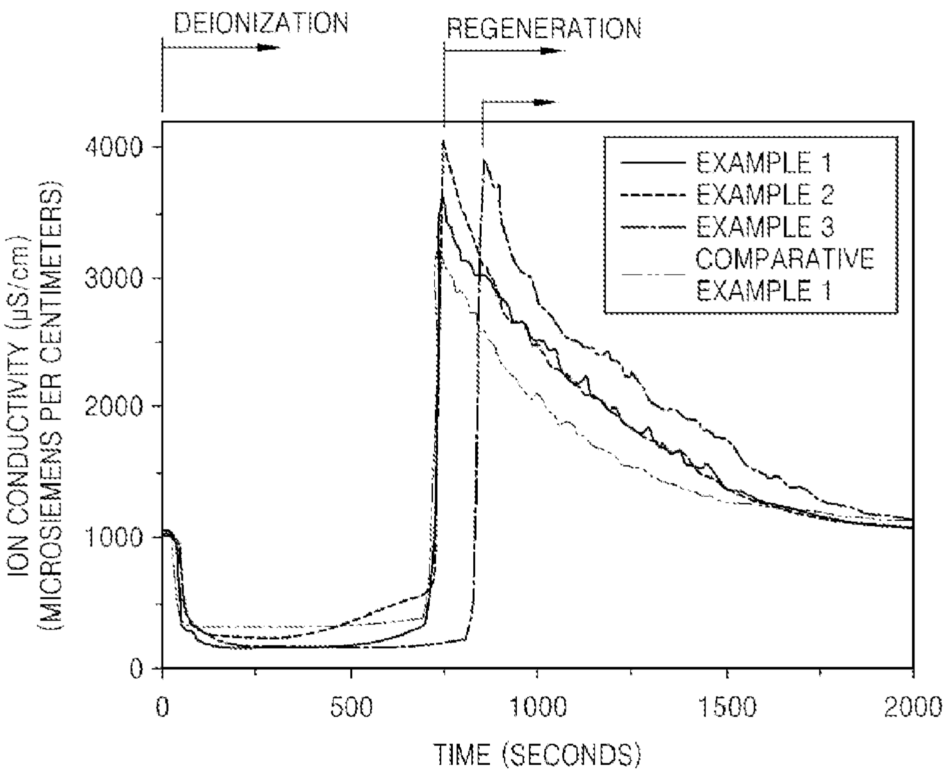
DEIONIZATION
REGENERATION
4000
3000
2000
1000
0
ION CONDUCTIVITY (μS/cm)
(MICROSIEMENS PER CENTIMETERS)
0
500
1000
1500
2000
TIME (SECONDS)
EXAMPLE 1
EXAMPLE 2
EXAMPLE 3
COMPARATIVE
EXAMPLE 1

FIG. 9

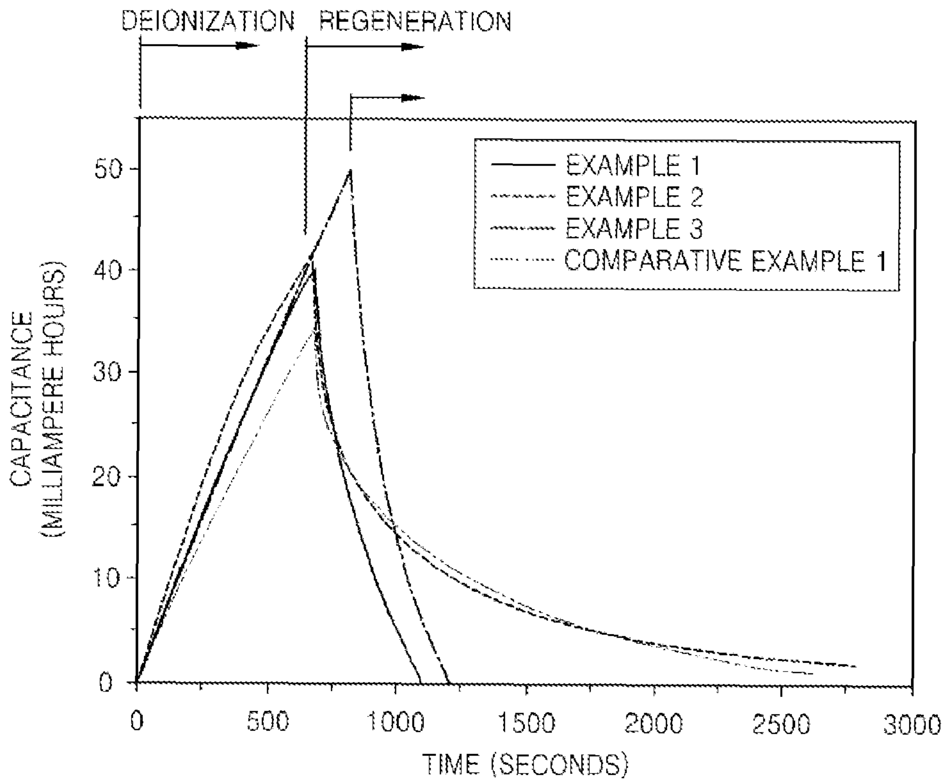
DEIONIZATION
REGENERATION
EXAMPLE 1
EXAMPLE 2
EXAMPLE 3
COMPARATIVE EXAMPLE 1
CAPACITANCE (MILLIAMPERE HOURS)
0
10
20
30
40
50
0
500
1000
1500
2000
2500
3000
TIME (SECONDS)

Europäisches Patentamt
European Patent Office
Office européen des brevets

# EUROPEAN SEARCH REPORT

Application Number
EP 10 18 8253

| Category | Citation of document with indication, where appropriate, of relevant passages | Relevant to claim | CLASSIFICATION OF THE APPLICATION (IPC) |
|---|---|---|---|
| X | US 2009/086409 A1 (KANG HYO-RANG [KR] ET AL) 2 April 2009 (2009-04-02)<br>* paragraph [0036] - paragraph [0047]; figure 2a *<br>----- | 1-16 | INV.<br>C02F1/469 |
| A | OREN ET AL: "Capacitive deionization (CDI) for desalination and water treatment - past, present and future (a review)", DESALINATION, ELSEVIER, AMSTERDAM, NL, vol. 228, no. 1-3, 15 August 2008 (2008-08-15), pages 10-29, XP022735169, ISSN: 0011-9164, DOI: DOI:10.1016/J.DESAL.2007.08.005 [retrieved on 2008-06-18]<br>* the whole document *<br>----- | 1-16 | |
| A | BROSEUS R ET AL: "Removal of total dissolved solids, nitrates and ammonium ions from drinking water using charge-barrier capacitive deionisation", DESALINATION, ELSEVIER, AMSTERDAM, NL, vol. 249, no. 1, 30 November 2009 (2009-11-30), pages 217-223, XP026699827, ISSN: 0011-9164, DOI: DOI:10.1016/J.DESAL.2008.12.048 [retrieved on 2009-10-03]<br>* the whole document *<br>----- | 1-16 | TECHNICAL FIELDS SEARCHED (IPC)<br>C02F |

The present search report has been drawn up for all claims

1

| Place of search | Date of completion of the search | Examiner |
|---|---|---|
| The Hague | 8 April 2011 | Liebig, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 10 18 8253

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2011

| Patent document cited in search report | Publication date | Patent family member(s) | Publication date |
| --- | --- | --- | --- |
| US 2009086409 A1 | 02-04-2009 | KR 20080107214 A | 10-12-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6709560 B, Andelman
- KR 20090077161